# FASCICULE DE BREVET EUROPEEN

(11) **EP 0 922 229 B1**
(45) Date de publication et mention de la délivrance du brevet: **12.01.2005**
(21) Numéro de dépôt: 98930838.2
(22) Date de dépôt: 11.06.1998
(51) Int. Cl.: G01N 35/02

(54) **PROCEDE POUR L'ANALYSE AUTOMATIQUE EN CONTINU OU EN DISCONTINU D'ECHANTILLONS CONTENUS DANS DES RECIPIENTS**
VERFAHREN ZUR KONTINUIERLICHEN ODER DISKONTINUIERLICHEN AUTOMATISCHEN ANALYSE VON IN BEHÄLTERN PLAZIERTEN PROBEN
METHOD FOR CONTINUOUS OR DISCONTINUOUS AUTOMATIC ANALYSING OF SAMPLES PLACED IN CONTAINERS

(30) Priorité: 16.06.1997 FR 9707751
(43) Date de publication de la demande: 16.06.1999
(73) Titulaire: DIAGNOSTICA STAGO (Société par Actions Simplifiée), F-92602 Asnières (FR)
(72) Inventeur: ROUSSEAU, Alain, F-75004 Paris (FR); GELIN, Jean-François, F-94000 Créteil (FR)
(74) Mandataire: de Saint-Palais, Arnaud Marie
(86) Numéro de dépôt international: PCT/FR1998/001223
(87) Numéro de publication internationale: WO 1998/058261

(56) Documents cités:
- EP-A- 0 567 093
- EP-A- 0 629 858
- US-A- 4 798 095
- US-A- 5 380 488
- US-A- 5 538 849
- PATENT ABSTRACTS OF JAPAN vol. 006, no. 141 (P-131), 30 juillet 1982 & JP 57 061950 A (FUJIREBIO INC;OTHERS: 01), 14 avril 1982

## Description

La présente invention concerne un procédé pour l'analyse automatique en continu ou en discontinu d'échantillons contenus dans des récipients tels que, par exemple, des tubes à essais.

Il existe déjà de nombreux procédés d'analyse tels que par exemple ceux décrits dans les brevets US -A- 5 538 849 et US-A-4 798 095.

Souvent, en vue de leur analyse, les récipients d'échantillon sont disposés en ligne dans des conteneurs ou portoirs contenant chacun plusieurs tubes (en général cinq) axés verticalement dans un plan médian vertical longitudinal du conteneur.

Les portoirs munis de leurs échantillons sont alors disposés à la file sur un convoyeur passant dans le poste d'analyse d'un automate d'analyse où ils subissent les uns après les autres les opérations de pipetages propres à l'analyse qui doit être réalisée.

Il s'avère que ce traitement séquentiel des échantillons, qui se trouve décrit dans le brevet EP 0 567 093, présente divers inconvénients :
- difficulté de relance d'un test ou de complément d'analyse (il faut aller manuellement chercher le tube dans les portoirs déjà prélevés),
- les échantillons sont stockés à température ambiante, ce qui est très préjudiciable à certains paramètres labiles,
- le tri de tube pour stocker des échantillons en échantillothèque ou différer des tests est très difficile,
- le traitement des tubes urgent est rendu difficile par le fait qu'il faut court-circuiter la file d'attente.

C'est la raison pour laquelle on a également proposé des automates d'analyse comprenant une aire de pipetage dans laquelle les récipients d'échantillon préalablement identifiés sont disposés selon une répartition matricielle. Au-dessus de cette aire de pipetage se déplace, selon deux axes de coordonnées perpendiculaires, une tête d'injection et/ou de prélèvement (tête de pipetage) dont le fonctionnement ainsi que les déplacements sont commandés par un automatisme piloté par un processeur. Il est clair que grâce à cette disposition, il devient possible d'effectuer plusieurs traitements d'analyse en parallèle et donc de relancer à tout moment. L'inconvénient de cette solution réside alors dans le fait qu'elle ne permet pas un chargement continu ou semi- continu de l'automate : chaque séquence de fonctionnement implique un chargement manuel de la zone de pipetage avec identification de chacun des tubes, de son emplacement, et du type d'analyse à effectuer.

Ces opérations qui exigent la présence d'un opérateur, sont relativement longues et ne permettent pas de garantir l'absence d'erreur notamment dans la relation identification/position des tubes.

Dans le but de supprimer ces inconvénients, l'invention propose un procédé mettant en oeuvre un automate d'analyse du type susdit dans lequel les récipients d'échantillon (par exemple les tubes) préalablement disposés dans des portoirs sont mobiles à l'intérieur de l'aire de pipetage au cours des phases d'analyse, le chargement, le déchargement de cette aire de pipetage ainsi que les déplacements des portoirs à l'intérieur de cette dernière s'effectuant automatiquement.

Pour parvenir à ces résultats, le procédé selon l'invention comprend un cycle opératoire comportant au moins les phases suivantes :
- la mise en place des récipients d'échantillon à analyser à l'intérieur de portoirs dans lesquels les récipients axés verticalement sont disposés en ligne parallèlement à l'axe longitudinal desdits portoirs,
- un premier déplacement des portoirs à la suite les uns des autres selon un premier trajet rectiligne pour les amener au droit d'une zone d'accès à l'aire de pipetage,
- l'identification, de préférence automatique, des récipients au cours de ce premier déplacement,
- un deuxième déplacement rectiligne selon un trajet perpendiculaire au premier, au cours duquel les portoirs, qui se trouvent disposés côte à côte, parallèlement au premier trajet, sont déplacés en translation et traversent de part en part l'aire de pipetage pour atteindre une zone de sortie située à l'opposé de la zone d'accès,
- un troisième déplacement rectiligne selon un trajet parallèle au premier, au cours duquel les portoirs sont amenés à la file de la première zone de sortie à une deuxième zone d'entrée à l'aire de pipetage,
- un quatrième déplacement rectiligne selon un trajet parallèle au second, au cours duquel les portoirs qui sont à nouveau disposés côte à côte parallèlement au premier trajet sont déplacés en translation à travers l'aire de pipetage pour atteindre une deuxième zone de sortie située sur le premier trajet,
- un cinquième déplacement rectiligne le long du premier trajet pour amener le portoir à la première zone d'accès en vue de recommencer un nouveau cycle ou à une zone d'évacuation du portoir.

Grâce à ces dispositions :
- au cours du deuxième trajet, chaque portoir balaye une première fraction, par exemple une première moitié, de l'aire de pipetage,
- au cours du quatrième trajet, chaque portoir balaye une seconde fraction, par exemple la deuxième moitié, de l'aire de pipetage,
- au cours de chacun de ces deux trajets, chaque récipient se déplace sur la même colonne de la matrice de l'aire de pipetage.

Il s'avère donc qu'à l'aide de capteurs relativement simples permettant de déterminer la position de chacun des portoirs, le processeur qui gère les déplacements de la tête de pipetage peut connaître, à chaque instant, la position de chaque récipient dans l'aire de pipetage. Il peut donc effectuer des prélèvements ou des injections de produits dans n'importe quel récipient présent dans l'aire de pipetage selon un programme fonction de la nature de l'analyse à effectuer, indépendamment de l'ordre dans lequel le récipient a été introduit dans l'automate d'analyse.

Bien entendu, l'invention concerne également un automate d'analyse conçu pour la mise en oeuvre du procédé précédemment décrit, cet automate faisant intervenir, de part et d'autre de l'aire de pipetage, un premier ensemble comportant deux convoyeurs linéaires parallèles conçus pour transporter les portoirs à la file, orientés selon l'axe de déplacement de ces transporteurs, et un deuxième ensemble comprenant au moins deux convoyeurs linéaires perpendiculaires aux deux premiers et conçus pour transporter les portoirs, orientés perpendiculairement à l'axe de déplacement de ces deux convoyeurs, à l'intérieur de l'aire de pipetage, les convoyeurs de ce deuxième ensemble débouchant dans des zones de transfert d'entrée/sortie des deux convoyeurs du premier ensemble.

Avantageusement, l'automate d'analyse pourra comprendre un dispositif de lecture des codes d'identification inscrits sur les parois cylindriques des tubes contenus dans les portoirs, ce dispositif de lecture équipant l'un des convoyeurs linéaires en amont des susdites aires de transfert de ce convoyeur.

De même, l'aire de pipetage et plus généralement l'intérieur de l'automate d'analyse pourra être maintenue à une température propre à conserver les échantillons.

Un mode d'exécution d'un automate d'analyse selon l'invention sera décrit ci-après, à titre d'exemple non limitatif, avec référence aux dessins annexés dans lesquels :

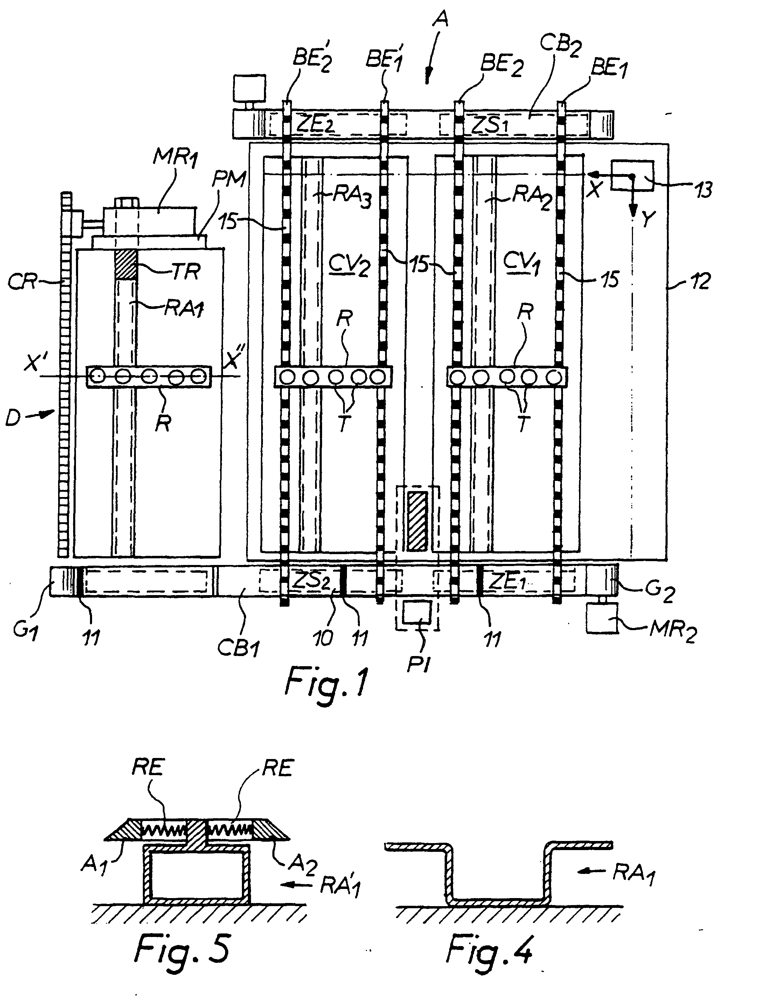

La figure 1 est une vue schématique de dessus d'un automate d'analyse selon l'invention ;
La figure 2 est une vue à plus grande échelle d'un dispositif de lecture automatique des codes d'identification portés par les tubes d'échantillon ;
La figure 3 est une vue en perspective d'un portoir spécialement conformé pour permettre la lecture des tubes d'échantillon ;
La figure 4 est une vue en coupe d'un rail de guidage des portoirs avec un tronçon d'alimentation à ailes escamotables ;
La figure 5 est une coupe transversale schématique du tronçon escamotable.

Dans cet exemple, l'automate d'analyse automatique A est destiné à effectuer des tests d'hémostase sur des échantillons de sang centrifugés, contenus dans des tubes T sur la paroi desquels sont indiquées, sous la forme d'un code à barres, des données d'identification concernant par exemple l'identité de la personne sur laquelle on a effectué le prélèvement sanguin et la nature des tests qui doivent être effectués.

Au cours du processus qui précède la phase de réalisation des tests, les prélèvements sanguins contenus dans les tubes bouchés T sont disposés dans le portoir d'une centrifugeuse où ils sont soumis à une centrifugation. Les tubes peuvent être maintenus dans les portoirs afin d'éviter des manipulations.

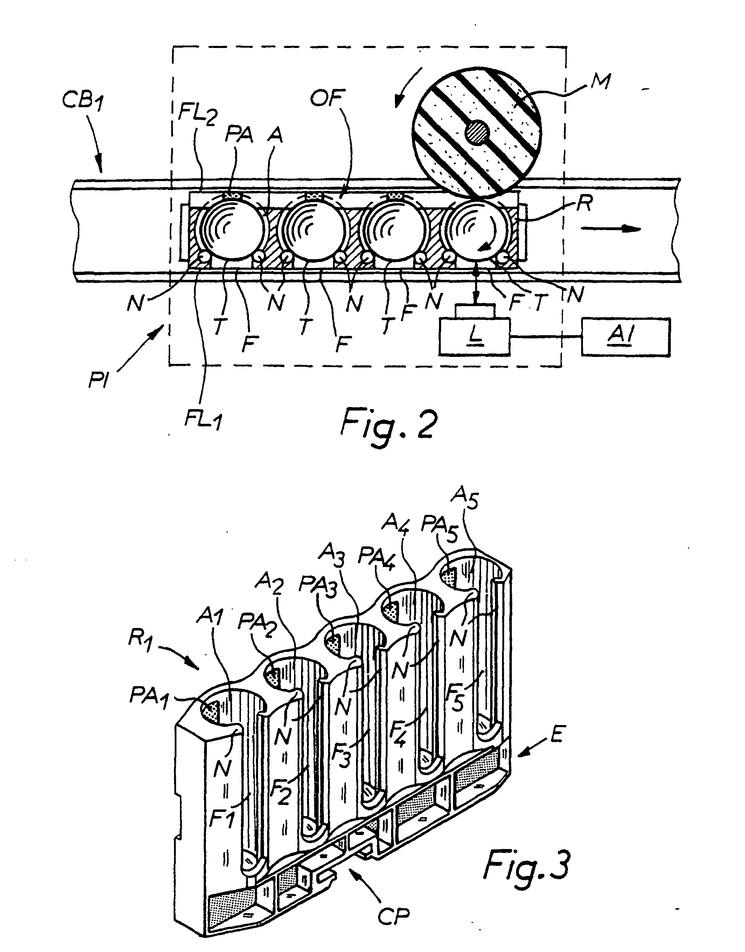

Au sortir de la centrifugeuse, les tubes sont disposés dans des portoirs R par exemple du type de celui représenté sur la figure 3 qui contient cinq tubes T. Les portoirs R sont eux-mêmes disposés dans des paniers facilement transportables et spécialement conçus pour être placés dans un distributeur de portoirs D qui constitue le poste d'accès des portoirs à l'automate d'analyse A.

Dans ces paniers, les portoirs R sont disposés côte à côte pour former une file orientée perpendiculairement à l'axe longitudinal des portoirs.

En fait, à l'intérieur du panier, les portoirs R se trouvent guidés dans le sens de la file par un rail profilé en Ω inversé RA₁ solidaire du fond du panier et qui s'engage dans une cavité prismatique transversale CP de section en forme de T réalisée dans l'embase E des portoirs R. La mise en place des portoirs R sur le rail RA₁ peut être facilitée en prévoyant à l'extrémité du rail RA₁ un tronçon TR dans lequel les ailes latérales A₁, A₂ du rail RA₁ sont escamotables. Ce résultat peut être obtenu en prévoyant des ailes A₁, A₂ à bord chanfreiné, mobiles en translation vers l'intérieur du rail RA₁ et maintenues en position déployée par des ressorts RE (figure 5).

Grâce à cette disposition, il devient possible de réaliser l'assemblage des portoirs sur le rail RA₁ en l'engageant par le dessus du tronçon de rail TR au terme d'un déplacement vertical pendant lequel les bords extérieurs de la cavité CP viennent en appui sur les bords chanfreinés des ailes latérales A₁, A₂ en provoquant leur rétraction. Lorsque les ailes A₁, A₂ atteignent le niveau de la partie la plus large de la cavité CP, elles se déploient sous l'effet des ressorts RE en réalisant ainsi l'assemblage. Le portoir peut alors être déplacé en translation, perpendiculairement à son axe longitudinal X'X" pour atteindre la section à ailes fixes du rail RA₁. Cette solution s'avère plus ergonomique et plus simple que la solution qui consisterait à enfiler les portoirs R par une extrémité du rail RA₁.

Dans cet exemple, le distributeur de portoirs D comprend un poussoir PM mobile dans l'axe du rail fond de panier RA₁ et dont les déplacements sont assurés au moyen d'un motoréducteur MR₁ qui entraîne un pignon PI engrenant avec une crémaillère CR axée parallèlement au rail. Ce poussoir PM sert à déplacer les portoirs R de la file le long du rail RA₁ afin d'amener le dernier portoir R de la file sur un convoyeur à bande CB₁ qui alimente l'automate d'analyse. Au cours de leurs déplacements, les portoirs R serrés les uns contre les autres demeurent orientés perpendiculairement au rail RA₁.

Par contre, sur le convoyeur CB₁, les portoirs R entraînés un à un sont orientés selon un axe de déplacement perpendiculaire au rail RA₁.

Le convoyeur CB₁, de structure classique, se compose d'une bande 10 par exemple en élastomère passant sur deux galets G₁, G₂ à axes horizontaux parallèles dont l'un G₂ est entraîné en rotation par un motoréducteur MR₂. La bande 10 comprend, sur sa face externe, des crantages 11 dont l'espacement correspond sensiblement à la longueur d'un portoir R.

Cette bande 10 circule le long d'un bord longitudinal d'une aire de pipetage 12 de l'automate A, successivement en regard d'une zone de sortie et d'une zone d'accès à l'aire de pipetage 12.

L'aire de pipetage 12 qui présente une forme rectangulaire est destinée à recevoir deux files de portoirs R disposées côte à côte, au-dessus desquelles peut se déplacer une tête de pipetage 13 de type classique, mobile selon deux directions perpendiculaires X, Y, équipée de moyens permettant d'effectuer des injections et/ou des prélèvements à l'intérieur des tubes contenus dans les portoirs.

Cette aire de pipetage 12 est en fait matérialisée par les aires de passage de deux convoyeurs CV₁, CV₂ axés perpendiculairement au convoyeur CB₁ et qui s'étendent à partir des zones d'accès et de sortie ZE₁ et ZS₂.

Ces convoyeurs CV₁, CV₂ font chacun intervenir un rail de guidage RA₂, RA₃ en Ω (similaire au rail de fond de panier) axé perpendiculairement au convoyeur CB₁ et sur lesquels viennent s'engager par leurs cavités prismatiques CP les portoirs R transportés par le convoyeur CB₁.

De part et d'autre de ce rail RA₂, RA₃, sont disposées deux bandes d'entraînement BE₁, BE₂ - BE'₁, BE'₂ munies de crantages 15 dont le pas est sensiblement égal à l'épaisseur des portoirs R.

Le transfert des portoirs R de l'un à l'autre convoyeur CV₁, CV₂ est assuré soit par le convoyeur à bande CB₁, soit par un deuxième convoyeur à bande CB₂ qui s'étend le long du bord longitudinal de l'aire de pipetage 12, opposé au convoyeur CB₁.

Ce convoyeur CB₂ qui présente une structure similaire à celle du convoyeur CB₁ passe successivement dans la zone de sortie ZS₁ du convoyeur CV₁ puis dans la zone d'entrée ZE₂ du convoyeur CV₂.

Il permet donc d'assurer un transfert par translation des portoirs R selon leur axe longitudinal de sorte que dans la zone d'accès ZE₂, le portoir R se trouve placé dans l'axe du convoyeur CV₂. Ce portoir R se trouve alors entraîné par les crantages des bandes 15 et vient s'engager par sa cavité prismatique sur le rail RA₃ où il peut coulisser jusqu'à atteindre la zone de sortie ZS₂.

Avantageusement, les déplacements des portoirs R dans l'aire de pipetage 12 pourront être effectués pas à pas, chaque pas correspondant à l'épaisseur d'un portoir R. Dans ce cas, les déplacements des portoirs R par les convoyeurs CB₁, CB₂ devront être également effectués pas à pas en synchronisme avec les précédents.

Dans cet exemple, le convoyeur CB₁ est équipé d'un poste d'identification automatique des tubes PI disposé au niveau de la jonction entre les aires de passage des portoirs R sur les convoyeurs CV₁, CV₂. Ce dispositif illustré sur la figure 2, implique l'usage de portoirs R comprenant d'un côté, une face latérale ajourée FL₁ dont les ajourements constituent des fenêtres F destinées à permettre la lecture optique des codes d'identification portés par les parois cylindriques des tubes T et, de l'autre côté, un orifice en forme de fente OF qui s'étend sur toute la longueur de la face latérale FL₂ du portoir R.

Tel que représenté sur la figure 2, le poste d'identification, matérialisé par un rectangle en traits interrompus, comprend :
- d'une part, un dispositif optoélectronique de lecture L (par exemple une caméra vidéo associée à un analyseur d'image AI) disposé d'un côté du convoyeur CB₁, de manière à enregistrer l'image de la paroi cylindrique de chacun des tubes T chaque fois que la fenêtre F qui permet la vision de ce tube T se trouve dans le champ du dispositif de lecture L, et
- d'autre part, un dispositif d'entraînement qui consiste ici en une molette M en une matière résiliante telle que du caoutchouc entraînée par un moteur électrique ; cette molette M, axée verticalement, est disposée au droit du dispositif de lecture L, de l'autre côté du convoyeur CB₁ de manière à pouvoir s'engager dans l'orifice longitudinal OF du portoir R pour venir porter successivement sur la paroi cylindrique des tubes T et assurer ainsi leur entraînement en rotation.

Dans l'exemple représenté sur la figure 3, le portoir de forme générale parallélépipédique à bords verticaux chanfreinés comprend une embase E munie d'une nervuration délimitant une cavité prismatique transversale CP de section sensiblement en forme de C ou en queue d'aronde, destinée à venir coopérer avec un rail de guidage RA₁, RA₂, RA₃ de section complémentaire, par exemple en forme de T.

La partie supérieure du portoir R₁ comprend ici cinq alvéoles cylindriques verticales A₁ à A₅ ouvertes au niveau de la face supérieure du portoir, destinées à recevoir cinq tubes respectifs.

Du côté de la face FL₁, ces alvéoles A₁ à A₅ s'ouvrent vers l'extérieur grâce à des fenêtres oblongues F₁ à F₅ qui s'étendent depuis la face supérieure du portoir jusqu'au niveau de l'embase E.

Du côté de la face FL₂, le portoir R₁ comprend un orifice de section rectangulaire OF qui s'étend horizontalement, à mi-hauteur du portoir R, d'une extrémité à l'autre de ce dernier. La profondeur p de cet orifice est prévue de manière à ce qu'une portion de la paroi des tubes se trouve découverte et puisse ainsi coopérer avec un moyen d'entraînement en rotation du type de la molette M représentée sur la figure 2.

Par ailleurs, les alvéoles A₁ à A₅ du portoir comprennent de part et d'autre des fenêtres F₁ à F₅ des nervurations N sur lesquelles les tubes viennent en appui, de préférence tangentiellement.

A l'opposé de chacun des couples de nervures N est prévue une languette flexible PA₁ à PA₅ qui s'étend obliquement légèrement dans le volume intérieur de l'alvéole A₁ à A₅ correspondante pour maintenir le tube appliqué sur les nervures N.

Il apparaît que grâce aux dispositions précédemment décrites, les portoirs initialement contenus dans le panier disposé dans le distributeur D, sont transférés un à un sur la bande 10 du convoyeur CB₁ qui les transporte successivement au poste d'identification PI dans lequel les codes d'identification portés par les tubes sont lus successivement, puis dans la zone d'accès ZE₁ à l'aire de pipetage 12 dans une position selon laquelle la cavité prismatique CP se trouve située exactement dans l'axe du rail RA₂.

Le portoir R qui se trouve ainsi positionné dans la zone ZE₁ est alors entraîné par les crantages 15 des deux bandes d'entraînement BE₁, BE₂. Cet entraînement provoque tout d'abord l'engagement du rail RA₂ dans la cavité prismatique CP du portoir R puis le coulissement du portoir R le long de ce dernier jusqu'à ce qu'il atteigne la zone de sortie ZS₁ située sur le convoyeur CB₂. Le passage du portoir R dans cette zone ZS₁ provoque son désassemblage du rail RA₂ puis son entraînement par le convoyeur CB₂ jusqu'à la zone d'accès ZE₂ où il se positionne de manière à pouvoir s'engager sur le rail RA₃. Le portoir R se trouve alors entraîné par le convoyeur CV₂ et coulisse sur le rail RA₃ jusqu'à atteindre la zone de sortie ZS₂ où il se désengage du rail RA₃.

Le portoir R est alors entraîné par le convoyeur CB₁ soit vers la zone d'accès ZE₁ pour amorcer un nouveau cycle d'analyse, soit vers le distributeur D pour assurer, par un processus inverse au précédent, un retour des portoirs dans le panier précédemment vidé, soit même vers une zone de décharge (non représentée).

Bien entendu, la commande du distributeur D, des différents convoyeurs CB₁, CB₂, CV₁, CV₂, du poste d'identification PI et de l'automate d'analyse A (en particulier de la tête de pipetage 13) est assurée par un processeur qui reçoit une multiplicité d'informations en provenance de capteurs de position disposés le long de la chaîne cinématique empruntée par les portoirs.

Un avantage important du dispositif précédemment décrit consiste en ce qu'à l'intérieur de l'aire de pipetage, le processeur connaît la position exacte des tubes et leur identité. En conséquence, il peut gérer les déplacements et le fonctionnement de la tête de pipetage, selon un programme indépendant de l'ordre d'introduction du portoir dans l'automate mais en fonction de la nature et de la durée des analyses, voire même de l'urgence de l'analyse.

Bien entendu, l'invention ne se limite pas au mode d'exécution précédemment décrit.

Ainsi, l'automate pourrait comprendre une zone d'accès ZE₃ direct permettant de disposer sur le convoyeur CB₁ un portoir ne provenant pas du panier placé dans le distributeur.

De même, il pourrait comprendre une trappe TR située au niveau de la zone de sortie ZS₂ permettant d'extraire ou de disposer un tube dans un portoir stationné dans la zone ZS₂ afin de tri ou de sélection.

## Revendications

1. Procédé pour l'analyse automatique d'échantillons contenus dans des récipients (T) tels que des tubes à essais, ce procédé mettant en oeuvre un automate d'analyse (A) comprenant une aire de pipetage (12) dans laquelle les récipients d'échantillon (T) préalablement identifiés sont disposés et au-dessus de laquelle se déplace, selon deux axes de coordonnées perpendiculaires, une tête de pipetage (13),
**caractérisé en ce qu'**il comprend un cycle opératoire comprenant au moins les phases suivantes :
- la mise en place des récipients d'échantillon (T) à analyser à l'intérieur de portoirs (R) dans lesquels les récipients (T) axés verticalement sont disposés en ligne parallèlement à l'axe longitudinal desdits portoirs (R),
- un premier déplacement des portoirs (R) à la suite les uns des autres selon un premier trajet rectiligne pour les amener au droit d'une zone d'accès (ZE₁) à l'aire de pipetage (12),
- l'identification, de préférence automatique, des récipients (T) au cours de ce premier déplacement,
- un deuxième déplacement rectiligne selon un trajet perpendiculaire au premier, au cours duquel les portoirs (R), qui se trouvent disposés côte à côte, parallèlement au premier trajet, sont déplacés en translation et traversent de part en part l'aire de pipetage (12) pour atteindre une zone de sortie (ZS₁) située à l'opposé de la zone d'accès (ZE₁),
- un troisième déplacement rectiligne selon un trajet parallèle au premier, au cours duquel les portoirs sont amenés à la file de la première zone de sortie (ZS₁) à une deuxième zone d'entrée (ZE₂) à l'aire de pipetage (12),
- un quatrième déplacement rectiligne selon un trajet parallèle au second, au cours duquel les portoirs (R) qui sont à nouveau disposés côte à côte parallèlement au premier trajet sont déplacés en translation à travers l'aire de pipetage (12) pour atteindre une deuxième zone de sortie (ZS₂) située sur le premier trajet,
- un cinquième déplacement rectiligne le long du premier trajet pour amener le portoir (R) à la première zone d'accès (ZE₁) en vue de recommencer un nouveau cycle ou à une zone d'évacuation du portoir.

2. Procédé selon la revendication 1,
**caractérisé en ce que** les susdits déplacements sont de type pas à pas.

3. Procédé selon l'une des revendications 1 et 2,
**caractérisé en ce que** les portoirs (R) contenant les récipients (T) sont rangés côte à côté dans des paniers transportables destinés à être placés dans un distributeur (D) qui délivre les portoirs (R) un à un en vue d'effectuer le susdit premier déplacement.

4. Procédé selon l'une des revendications précédentes,
**caractérisé en ce que** lors du premier déplacement, l'axe longitudinal (X'X") des portoirs (R) est orienté parallèlement à l'axe de ce déplacement.

5. Procédé selon l'une des revendications précédentes,
**caractérisé en ce que** lors du deuxième déplacement, l'axe longitudinal (X'X") des portoirs (R) est orienté perpendiculairement à l'axe de ce déplacement.

6. Procédé selon l'une des revendications précédentes,
**caractérisé en ce que** lors du troisième déplacement, l'axe longitudinal (X"X") des portoirs (R) est parallèle à l'axe de ce déplacement.

7. Procédé selon l'une des revendications précédentes,
**caractérisé en ce que** lors du quatrième déplacement, l'axe longitudinal (X'X") des portoirs (R) est perpendiculaire à l'axe de ce déplacement.

8. Procédé selon l'une des revendications précédentes,
**caractérisé en ce que** la susdite phase d'identification s'effectue dans une zone comprise entre la susdite seconde zone de sortie (ZS₂) et la première zone d'accès (ZE₁).

9. Procédé selon l'une des revendications précédentes,
**caractérisé en ce que** la phase d'identification des tubes comprend une phase de lecture optoélectronique avec simultanément une mise en rotation des tubes (T).

10. Automate pour l'analyse automatique d'échantillons contenus dans des récipients disposés dans des portoirs, cet automate d'analyse comprenant une aire de pipetage (12) dans laquelle les récipients d'échantillon préalablement identifiés grâce à des moyens d'identification sont disposés et au-dessus de laquelle se déplace une tête de pipetage (13),
**caractérisé en ce qu'**il comporte, de part et d'autre de l'aire de pipetage (12), un premier ensemble comportant deux convoyeurs linéaires (CB₁, CB₂) parallèles conçus pour transporter les portoirs à la file, orientés selon l'axe de déplacement desdits convoyeurs (CB₁, CB₂), et un deuxième ensemble comprenant au moins deux convoyeurs linéaires (CV₁, CV₂) perpendiculaires aux deux premiers et conçus pour transporter les portoirs (R), orientés perpendiculairement à l'axe de déplacement de ces deux convoyeurs (CV₁, CV₂), à l'intérieur de l'aire de pipetage (12), les convoyeurs (CV₁, CV₂) de ce deuxième ensemble débouchant dans des zones de transfert d'entrée/sortie (ZE₁, ZE₂ - ZS₁, ZS₂) des deux convoyeurs (CB₁, CB₂) du premier ensemble, un processeur étant prévu pour commander l'automate et en particulier pour gérer les déplacements de la tête de pipetage de manière à effectuer des prélèvements ou des injections de produits dans n'importe quel récipient présent dans l'aire de pipetage selon un programme fonction de l'analyse à effectuer, indépendamment de l'ordre dans lequel le récipient a été introduit dans l'automate d'analyse.

11. Automate selon la revendication 10,
**caractérisé en ce qu'**il comprend un distributeur délivrant les portoirs un à un, en provenance d'un panier sur l'un des deux convoyeurs (CB₁, CB₂) du premier ensemble.

12. Automate selon l'une des revendications 10 et 11,
**caractérisé en ce que** les convoyeurs (CB₁, CB₂) du premier ensemble sont des convoyeurs à bandes dont les bandes sont munies de crantages.

13. Automate selon l'une des revendications 10 à 12,
**caractérisé en ce que** les convoyeurs du second ensemble comprennent un rail de guidage des rails, de part et d'autre duquel sont disposées deux bandes d'entraînement (BE₁, BE₂ - BE'₁, BE'₂) munies de crantages (15) dont le pas est sensiblement égal à l'épaisseur des portoirs (R).

14. Automate selon la revendication 13,
**caractérisé en ce que** le susdit rail présente une forme en Ω inversé et coopère avec une cavité transversale prismatique en forme de T prévue dans l'embase des portoirs.

15. Automate selon l'une des revendications 11 à 14,
**caractérisé en ce que** les paniers disposés dans le distributeur (D) comprennent un rail fond de panier en forme de Ω inversé qui coopère avec la susdite cavité prismatique des portoirs (R).

16. Automate selon la revendication 15,
**caractérisé en ce que** le susdit rail comprend un tronçon (TR) à ailes escamotables (A₁, A₂).

17. Automate selon l'une des revendications 10 à 16,
**caractérisé en ce qu'**il comprend un poste d'identification des récipients situé entre une zone d'entrée et une zone de sortie de l'aire de pipetage située sur l'un des convoyeurs (CB₁) du premier ensemble.

18. Automate selon la revendication 17,
**caractérisé en ce que** le susdit poste d'identification comprend d'un côté du convoyeur (CB₁) un dispositif de lecture optoélectronique (L) et, de l'autre côté, un dispositif d'entraînement en rotation du récipient (M).

19. Automate selon la revendication 18,
**caractérisé en ce que** le convoyeur (CB₁) auquel est associé la piste de lecture comprend, en amont de ce poste, une zone d'accès direct d'un portoir et/ou une trappe permettant d'extraire ou de disposer ou d'extraire un récipient dans un portoir stationné dans la zone(ZS₂).

## Patentansprüche

1. Verfahren für die automatische Analyse von Proben in Gefäßen (T) wie z. B. Reagenzgläsern, wobei ein Analysenautomat (A) eingesetzt wird, der einen Probeentnahmebereich (12) umfasst, in welchem die vorher identifizierten Probegefäße (T) angeordnet sind und wo sich ein Probeentnahmekopf (13) oberhalb dieses Bereiches, nach zwei senkrechten Koordinatenachsen verschiebt, **dadurch gekennzeichnet, dass** dieses Verfahren einen Arbeitszyklus mit mindestens folgenden Phasen umfasst:
- das Einsetzen der zu analysierenden Probegefäße (T) in die - Einsatzblöcke (R), worin die senkrecht ausgerichteten Gefäße (T) parallel in Reihe zur Längsachse der genannten Einsatzblöcke (R) angeordnet sind,
- eine erste Verschiebung der Einsatzblöcke (R) nacheinander entsprechend einer geradlinigen ersten Strecke, um sie rechts von einer Zugangszone (ZE₁) zum Probeentnahmebereich (12) zu führen,
- die vorzugsweise automatische Identifizierung der Gefäße (T) während dieser ersten Verschiebung,
- eine zweite geradlinige Verschiebung nach einer senkrecht zur ersten Verschiebung liegenden Strecke, während welcher die Seite an Seite angeordneten Einsatzblöcke (R) parallel zur ersten Strecke fortbewegt werden und die Probeentnahmezone (12) durchqueren, um einen Ausgangsbereich (ZS₁) zu erreichen, der gegenüber dem Zugangsbereich (ZE₁) liegt.
- eine dritte geradlinige Verschiebung nach einer parallel zur ersten Verschiebung liegenden Strecke, während welcher die Einsatzblöcke zur Reihe des ersten Ausgangsbereichs (ZS₁) zu einer zweiten Eingangszone (ZE₂) zum Probeentnahmebereich (12) geführt werden,
- eine vierte geradlinige Verschiebung entsprechend einer parallel zur zweiten Strecke liegenden Verschiebung, während welcher die Einsatzblöcke (R), die erneut Seite an Seite parallel zur ersten Strecke angeordnet sind, durch den Probeentnahmebereich (12) hindurch bewegt werden, um einen zweiten, auf der ersten Strecke gelegenen Ausgangsbereich zu erreichen (ZS₂),
- eine fünfte geradlinige Verschiebung entlang der ersten Strecke, um den Einsatzblock (R) zum ersten Zugangsbereich (ZE₁) zu führen, um dann wieder einen neuen Zyklus zu beginnen oder zu einem Abgangsbereich des Einsatzblocks zu führen.

2. Verfahren nach Anspruch 1, **dadurch gekennzeichnet, dass** die besagten Verschiebungen schrittweise erfolgen.

3. Verfahren nach einem der Ansprüche 1 und 2, **dadurch gekennzeichnet, dass** die Einsatzblöcke (R), die die Gefäße (T) enthalten, Seite an Seite in transportierbaren Körben angeordnet sind zur Unterbringung in einem Verteiler (D), der die Einsatzblöcke (R) einen nach dem anderen im Hinblick auf die erste Verschiebung ausliefert.

4. Verfahren nach einem der vorangehenden Ansprüche, **dadurch gekennzeichnet, dass** auf dem ersten Verschiebungsweg die Längsachse (X'X") der Einsatzblöcke (R) achsparallel zur Achse dieser Verschiebung gerichtet ist.

5. Verfahren nach einem der vorangehenden Ansprüche, **dadurch gekennzeichnet, dass** bei der zweiten Verschiebung die Längsachse (X'X") der Einsatzblöcke (R) senkrecht zur Achse dieses Verschiebungsweges orientiert ist.

6. Verfahren nach einem der vorangehenden Ansprüche, **dadurch gekennzeichnet, dass** bei der dritten Verschiebung die Längsachse (X'X") der Einsatzblöcke (R) parallel zur Achse dieser Verschiebung liegt.

7. Verfahren nach einem der vorangehenden Ansprüche, **dadurch gekennzeichnet, dass** bei der vierten Verschiebung die Längsachse (X'X") der Einsatzblöcke (R) senkrecht zur Achse dieser Verschiebung liegt.

8. Verfahren nach einem der vorangehenden Ansprüche, **dadurch gekennzeichnet, dass** die besagte Identifizierungsphase in einer Zone zwischen dem obengenannten zweiten Ausgangsbereich (ZS₂) und dem ersten Zugangsbereich (ZE₁) durchgeführt wird.

9. Verfahren nach einem der vorangehenden Ansprüche, **dadurch gekennzeichnet, dass** die Identifizierungsphase der Reagenzgläser eine optoelektronische Lesephase mit gleichzeitiger Rotation der Reagenzgläser (T) umfasst.

10. Analysenautomat für die automatische Analyse von Proben in Einsatzblöcken angeordneten Gefäßen, wobei dieser Analysenautomat einen Probeentnahmebereich (12) umfasst, in welchem die vorher identifizierten Probegefäße mit Hilfe von Identifizierungsvorrichtungen angeordnet sind und worauf sich ein Probeentnahmekopf (13) verschiebt, **dadurch gekennzeichnet, dass** es auf beiden Seiten der Probeentnahmezone (12) eine erste Gruppe mit zwei parallelen linearen Förderern (CB₁, CB₂) umfasst, um die Einsatzblöcke zur Kolonne zu transportieren, die entsprechend der Verschiebungsachse der genannten Förderer (CB₁, CB₂) orientiert sind, und eine zweite Gruppe mit mindestens zwei senkrecht zu den zwei ersten linearen Förderern (CV₁, CV₂) stehenden, und die so ausgelegt sind, um die senkrecht zur Verschiebungsachse dieser zwei Förderer (CV₁, CV₂) orientierten Einsatzblöcke (R) ins Innere der Probeentnahmezone (12) zu befördern, wobei die Förderer (CV₁, CV₂) dieser zweiten Gruppe in die Eingangs/Ausgangs-Übergangszonen (ZE₁, ZE₂ - ZS₁, ZS₂) der zwei Förderer (CB₁, CB₂) der ersten Gruppe mündet, wobei ein Prozessor vorgesehen ist, um dem Analysenautomaten Befehle zu geben und um insbesondere die Verschiebungen des Probeentnahmekopfes so zu leiten, um die Entnahmen oder die Einwürfe von Produkten in jedem vorhandenen Gefäß in der Probeentnahmezone nach einem Analysenprogramm durchzuführen, unabhängig von der Reihenfolge, in welcher das Gefäß in den Analysenautomat eingeschoben wurde.

11. Analysenautomat nach Anspruch 10, **dadurch gekennzeichnet, dass** dieser einen Verteiler umfasst, der die Einsatzblöcke einen nach dem anderen an einen Korb auf einen der beiden Förderer (CB₁, CB₂) der ersten Gruppe schickt.

12. Analysenautomat nach einem der Ansprüche 10 und 11, **dadurch gekennzeichnet, dass** die Förderer (CB₁, CB₂) der ersten Gruppe Bandförderer sind, wobei die Bänder mit Riffelungen versehen sind.

13. Analysenautomat nach einem der Ansprüche 10 bis 12, **dadurch gekennzeichnet, dass** die Förderer der zweiten Gruppe eine Führungsschiene von Schienen umfassen, worauf beiderseits zwei Antriebsbänder (BE₁, BE₂ - BE'₁, BE'₂) angeordnet werden, die mit Riffelungen (15) versehen sind, bei denen der Abstand ungefähr gleich wie die Dicke der Einsatzblöcke (R) ist.

14. Analysenautomat nach Anspruch 13, **dadurch gekennzeichnet, dass** die besagte Schiene eine umgekehrte Ω-Form darstellt und mit einer im Sockel der Einsatzblöcke vorgesehenen T-förmigen prismatischen Quervertiefung zusammenwirkt.

15. Analysenautomat nach einem der Ansprüche 11 bis 14, **dadurch gekennzeichnet, dass** die im Verteiler (D) angeordneten Körbe eine Korbboden-Schiene in Form eines umgekehrten Ω umfassen, die mit der besagten prismatischen Vertiefung der Einsatzblöcke (R) zusammenwirkt.

16. Analysenautomat nach Anspruch 15, **dadurch gekennzeichnet, dass** die besagte Schiene einen Strang (TR) mit versenkbaren Flügeln (A₁, A₂) umfasst.

17. Analysenautomat gemäß einem der Ansprüche 10 bis 16, **dadurch gekennzeichnet, dass** dieser einen Identifizierungsposten der Gefäße umfasst, der sich zwischen einem Eingangsbereich und einem Ausgangsbereich des Probeentnahmestegs befindet, der auf einem der Förderer (CB₁) der ersten Gruppe liegt.

18. Analysenautomat nach Anspruch 17, **dadurch gekennzeichnet, dass** der besagte Identifizierungsposten auf einer Seite des Förderers (CB₁) eine optoelektronische Lesevorrichtung (L) und auf der anderen Seite eine sich in Rotation befindliche Antriebsvorrichtung des Gefäßes (M) umfasst.

19. Analysenautomat nach Anspruch 18, **dadurch gekennzeichnet, dass** der Förderer (CB₁) zu welchem der Lesepfad zugeordnet ist, oberhalb dieses Postens einen direkten Zugangsbereich eines Einsatzblocks und/oder eine Klappe umfasst, wodurch es möglich ist, ein Gefäß herauszuziehen oder aufzustellen oder ein Gefäß in einem in der Zone (ZS₂) stationierten Einsatzblock herauszuziehen.

## Claims

1. Method for automatically analysing samples contained in recipients (T), such as test tubes, this method using an analysis robot (A) comprising a pipetting area (12) in which the previously identified sample recipient (T) are placed and above which a pipetting head (13) moves along two axes with perpendicular coordinates, **characterised in that** it comprises an operational cycle comprising at least the following stages :
- the placing of sample recipients (T) to be analysed inside containers (R) in which the vertically centred recipients (T) are disposed in line parallel to the longitudinal axis of said containers (R),
- a first movement of the containers (R) with one following the other along a first rectilinear path to bring them to the right of an access zone (ZE₁) at the pipetting area (12),
- the identification, preferably automatic, of the recipients (T) during this first movement,
- a second rectilinear movement along a path perpendicular to the first, during which the containers (R) located side by side, parallel to the first path, are translation-moved and traverse straight through the pipetting area (12) so as to reach an outlet zone (ZS₁) situated opposite the access zone (ZE₁),
- a third rectilinear movement along a path parallel to the first, during which the containers are brought in line from the first outlet zone (ZS₁) to a second inlet zone (ZE₂) at the pipetting area (12),
- a fourth rectilinear movement along a path parallel to the second, during which the containers (R) again disposed side by side parallel to the first path are translation-moved through the pipetting area (12) so as to reach a second outlet zone (ZS₂) situated on the first path,
- a fifth rectilinear movement along the first path so as to bring the container (R) to the first access zone (ZE₁) with a view to restarting a new cycle or to a zone for evacuating the container.

2. Method according to claim 1,
**characterised in that** said movements are step by step movements.

3. Method according to one of the claims 1 and 2,
**characterised in that** the containers (R) containing the recipients (T) are arranged side by side in transportable baskets intended to be placed in a distributor (D) which delivers the containers (R) one by one with a view to carrying out said first movement.

4. Method according to one of the preceding claims,
**characterised in that** during the first movement, the longitudinal axis (X'X") of the containers (R) is orientated parallel to the axis of this movement.

5. Method according to one of the preceding claims,
**characterised in that** during the second movement, the longitudinal axis (X'X") of the containers (R) is orientated perpendicular to the axis of this movement.

6. Method according to one of the preceding claims,
**characterised in that** during the third movement, the longitudinal axis (X'X") of the containers (R) is parallel to the axis of this movement.

7. Method according to one of the preceding claims,
**characterised in that** during the fourth movement, the longitudinal axis (X'X") of the containers (R) is perpendicular to the axis of this movement.

8. Method according to one of the preceding claims,
**characterised in that** said identification phase is carried out in a zone between said second outlet zone (ZS₂) and the first access zone (ZE₁).

9. Method according to one of the preceding claims,
**characterised in that** the identification phase of tube (T) comprises an optoelectronic reading phase with simultaneously a placing in rotation of the tubes (T).

10. Robot for automatic analysing samples contained in recipients disposed in containers, this analysis robot comprising a pipetting area (12) in which the previously identified sample recipients by means of identification means are disposed and above which a pipetting head (13) moves, **characterised in that** it comprises on both sides of the pipetting area (12), a first unit comprising two parallel linear conveyors (CB₁, CB₂) designed in such a way so as to transport the containers in line orientated along the displacement axis of said conveyors (CB₁, CB₂), and a second unit comprising at least two linear conveyors (CV₁, CV₂) perpendicular to the first ones and designed so as to transport the containers (R), orientated perpendicular to the displacement axis of these two conveyors (CV₁, CV₂), inside the pipetting area (12), the conveyors (CV₁, CV₂) of this second unit opening into the outlet/inlet transfer zones (ZE₁, ZE₂ - ZS₁, ZS₂) of the two conveyors (CB₁, CB₂) of the first unit, a processor being provided and in particular to control the movements of the pipetting head so as to to carry out samplings or injections of products in any recipient present in the pipetting area according to a programme depending of the type of analysis to be carried out, independent of the order in which the recipient has been introduced into the analysis robot.

11. Robot according to claim 10,
**characterised in that** it comprises a distributor delivering the containers one by one originating from a basket on one of the two conveyors (CB₁, CB₂) of the first unit.

12. Robot according to one of the preceding claims,
**characterised in that** the conveyors (CB₁, CB₂) of the first unit are belt conveyors whose belts are fitted with notches.

13. Robot according to one of the claims 10 to 12,
**characterised in that** the conveyors of the second unit comprise a guiding rail for guiding the rails, on both sides of which two drive strips (BE₁, BE₂ - BE'₁, BE'₂) are disposed and fitted with notches (15) whose pitch is approximately equal to the thickness of the containers (R).

14. Robot according to claim 13,
**characterised in that** said rail has an inverted Ω shape and co-operates with a T-shaped transversal prismatic cavity provided in the seat of the containers.

15. Robot according to one of the claims 11 to 14,
**characterised in that** the baskets disposed in the distributor (D) comprise an inverted Ω-shaped basket bottom rail which co-operates with said prismatic cavity of the containers (R).

16. Robot according to claim 15,
**characterised in that** said rail comprises a section (TR) with retractable wings (A₁, A₂).

17. Robot according to one of the claims 10 to 16,
**characterised in that** it comprises a recipients identification station situated between one inlet zone and one outlet zone of the pipetting area situated on one of the conveyors (CB₁) of the first unit.

18. Robot according to claim 17,
**characterised in that** said identification station comprises on one side of the conveyor (CB₁) an optoelectronic reading device (L), and on the other side a device (M) for driving the recipient in rotation.

19. Robot according to claim 18,
**characterised in that** the conveyor (CB₁) associated with the reading device comprises upstream of this station a direct access zone of a container and/or a trap making it possible to extract or to arrange or to extract a recipient in a container located in the zone (ZS₂).
